# FASCICULE DE BREVET EUROPEEN

(11) **EP 1 681 896 B1**
(45) Date de publication et mention de la délivrance du brevet: **23.04.2008**
(21) Numéro de dépôt: 06290026.1
(22) Date de dépôt: 04.01.2006
(51) Int. Cl.: H04Q 7/38

(54) **Procédé d'interruption du locuteur du moment d'un appel de groupe par un des auditeurs dudit appel de groupe**
Verfahren zur Unterbrechung eines Sprechers durch einen Zuhörer während eines Gruppenanrufes
Method for interrupting a speaker during a group call by a listener of the group call

(30) Priorité: 12.01.2005 FR 0500327
(43) Date de publication de la demande: 19.07.2006
(73) Titulaire: Sagem SA, 75015 Paris (FR)
(72) Inventeur: Dorion, Marc, 69009 Lyon (FR)
(74) Mandataire: Maillet, Alain

(56) Documents cités:
- WO-A-00/38439
- US-A- 5 463 617
- "Digital cellular telecommunications system (Phase 2+); Voice Group Call Service (VGCS); Stage 2 (GSM 03.68 version 7.1.0 Release 1998); ETSI TS 100 933" ETSI STANDARDS, EUROPEAN TELECOMMUNICATIONS STANDARDS INSTITUTE, SOPHIA-ANTIPO, FR, vol. 3-CN1;3-CN4;SMG3, no. V710, mai 2000 (2000-05), XP014005741 ISSN: 0000-0001

## Description

La présente invention concerne un procédé d'interruption du locuteur du moment d'un appel de groupe par un des auditeurs dudit appel de groupe, ledit appel de groupe étant établi dans un réseau de téléphonie mobile, par exemple du type GSM (Global System for Mobile communications) supportant des appels de groupe.

Dans le système de téléphonie mobile GSM normalisé à l'ETSI (European Telecommunications Standards Institute : Institut européen des standards de télécommunications), est prévu un service vocal d'appel de groupe VGCS (Voice Group Call Service) avec lequel il est possible d'établir sur la liaison radio une conversation avec un groupe prédéfini d'abonnés dans un mode half duplex. Un description de ce service est donnée dans les recommandations de l'ETSI référencées respectivement GSM 02.68, GSM 03.68 et GSM 04.68. Certains alinéas de la recommandation GSM 04.08 sont également relatifs à ce service.

Plus précisément, ce service VGCS permet à des abonnés qui appartiennent à un même groupe prédéfini de communiquer entre eux, après établissement d'une communication de groupe (encore appelée appel de groupe : group call), selon le principe d'un seul locuteur (talker), qui est le seul à un moment donné au cours de cet appel de groupe à avoir la parole (il est dit dans un mode de transmission de groupe : group transmit mode), à destination de plusieurs auditeurs (listener) qui ne peuvent par conséquent qu'écouter (ils sont dits dans un mode de réception de groupe : group receive mode). La station mobile du locuteur utilise pour ce faire la voie montante (uplink) d'un canal de données, du type TCH (Trafic Channel) et appelé par la suite canal de groupe GCH (Group Channel), mais également la voie descendante (downlink) du même canal GCH alors que la station mobile de chaque auditeur n'utilise que la voie descendante. Lorsqu'aucun locuteur n'est présent dans un groupe, le réseau avertit l'ensemble des abonnés du groupe que la voie montante du canal de groupe est libre pour accès et, ce, par l'envoi de messages spécifiques dits UPLINK FREE. A l'inverse, lorsqu'un locuteur est présent dans un groupe pendant un appel de groupe, le réseau avertit les stations mobiles des auditeurs du même groupe que la voie montant du canal de groupe GCH est occupée et, ce, par l'envoi de messages appelés UPLINK BUSY. Si un abonné souhaite être locuteur dans un groupe pour un appel de groupe déjà établi, il fait une requête d'accès à la voie montant du canal de groupe GCH par l'envoi d'un message spécifique UPLINK ACCESS et une procédure d'accès au canal montant (Uplink access procedure) est mise en oeuvre. Essentiellement, celle-ci consiste à permettre à cet abonné de devenir locuteur et d'ainsi s'approprier la voie montante du canal de groupe GCH lorsque cette voie montante est libre d'accès et inversement, à rejeter la requête d'accès de tout abonné lorsque la voie montante n'est pas libre d'accès. Pour plus de détails sur cette procédure, on pourra se reporter utilement à la recommandation GSM 04.08 et notamment aux chapitres 3.1.2.3, 3.1.2.4, 3.3.1.2, 3.4.15, etc. On notera qu'à tout moment un locuteur peut revenir dans le mode de réception de groupe et ainsi libérer l'accès au canal montant.

Le problème que pose cette architecture est que, dans l'état actuel, il n'est pas possible pour une station mobile d'un auditeur d'interrompre un locuteur en cours d'appel de groupe tant que celui-ci n'a pas rendu libre l'accès à la voie montante du canal de groupe, car la station mobile du locuteur a? pendant cet appel de groupe, en quelque sorte le monopole de la voie montante du canal de groupe GCH ou d'un canal dédié. Le seul moyen aujourd'hui pour un auditeur de devenir le locuteur d'un appel de groupe est d'attendre que le locuteur du moment ait rendu libre l'accès à la voie montante du canal de groupe puis de faire une demande d'accès à cette voie montante pour devenir ainsi locuteur.

Il y a donc, dans le système qui a été présenté ci-dessus, un besoin pour la mise en place de moyens permettant à un auditeur d'interrompre un locuteur pour le ramener à l'état d'auditeur et pour devenir lui-même un locuteur.

Le brevet américain US 5,463,617 décrit une méthode pour interrompre un locuteur d'un appel de groupe mis en oeuvre dans un système de communication sans fil de type TDM. Cette méthode utilise des ressources radio spécifiques à la fois montantes et descendantes qui sont allouées par un contrôleur central du système suite à l'émission d'une requête pour cet appel de groupe par une des unités de communication du système.

La présente invention concerne, quant à elle, un procédé d'interruption du locuteur du moment d'un appel de groupe par un des auditeurs dudit appel de groupe, ledit appel de groupe étant établi dans un réseau de téléphonie mobile supportant des appels de groupe de manière que l'émission de la station mobile dudit locuteur en direction du réseau se fasse sur la voie montante d'un canal dédié ou d'un canal de groupe et que la réception de la station mobile de chaque auditeur se fasse sur la voie descendante dudit canal de groupe, la station mobile dudit locuteur étant au moment considéré sous la couverture d'une cellule dudit réseau, chaque auditeur pouvant être sous la couverture de la même cellule ou sous la couverture d'une autre cellule.

Selon une caractéristique de la présente invention, ledit procédé comporte les étapes suivantes mises en oeuvre lorsque ladite station mobile de l'auditeur souhaitant interrompre ledit locuteur est sous la couverture d'une cellule autre que celle sous laquelle se trouve ledit locuteur :
a) une étape d'accès de la station mobile de l'auditeur requérant à la voie montante du canal de groupe GCH pour la transmission au réseau d'une requête d'interruption de locuteur,
b) une étape de traitement par le réseau de ladite requête pour décider d'interrompre ou pas ledit locuteur, et
c) une étape d'interruption du locuteur lorsque ledit réseau a décidé ladite interruption.

Avantageusement, ledit procédé comporte en outre une étape d'information de chaque station mobile d'une groupe d'appel pour savoir à chaque instant si oui ou non la cellule sous la couverture de laquelle elle se trouve est également celle sous la couverture de laquelle se trouve la station mobile du locuteur du moment du groupe d'appel.

Dans le cas où ledit réseau est du type où il transmet, sur un canal de signalisation spécifique lié au canal de groupe considéré, une valeur d'un temps d'avance liée au temps de propagation station mobile du locuteur - réseau, ledit procédé comporte avantageusement, pour la ou les cellules de l'aire d'un appel de groupe qui ne couvrent pas la station mobile du locuteur du groupe d'appel, une étape de modification de la valeur de temps d'avance en une valeur prédéfinie autre qu'une valeur susceptible d'être une valeur de mesure.

Selon une autre caractéristique de la présente invention, ledit procédé comporte une étape de traitement des niveaux de priorité relatifs du locuteur et de l'auditeur désirant interrompre le locuteur.

Avantageusement, cette étape de traitement des niveaux de priorité relatifs comprend :
- une sous-étape de transmission à chacun desdits auditeurs de l'appel de groupe du niveau de priorité du locuteur du moment,
- une sous-étape de comparaison dudit niveau de priorité du locuteur transmis au niveau de priorité de l'auditeur désirant interrompre le locuteur, ladite étape étant mise en oeuvre par la station mobile dudit auditeur,
ladite requête d'interruption du locuteur du moment étant émise si la sous-étape de comparaison révèle que le niveau de priorité dudit auditeur est au moins supérieur à celui du locuteur.

Alternativement, ladite étape de traitement des niveaux de priorité relatifs comprend une sous-étape de comparaison dudit niveau de priorité du locuteur au niveau de priorité de l'auditeur requérant, ladite étape étant mise en oeuvre par ledit réseau, ladite requête étant rejetée si la sous-étape de comparaison révèle que le niveau de priorité dudit auditeur est au moins supérieur à celui du locuteur.

De plus, il peut être avantageux que le niveau de priorité de l'auditeur requérant soit transmis, en même temps que ou dans ladite requête d'interruption. Par ailleurs, le niveau de priorité de chacun des abonnés d'un appel de groupe peut-être connu du réseau.

Selon une autre caractéristique de la présente invention, alors que ledit appel de groupe est établi de manière que l'émission de la station mobile dudit locuteur en direction du réseau se fasse sur la voie montante d'un canal dédié, les étapes a), b) et c) du procédé décrit ci-dessus sont également mises en oeuvre lorsque ladite station mobile de l'auditeur souhaitant interrompre ledit locuteur est sous la couverture de la cellule sous laquelle ledit locuteur se trouve.

Selon une autre caractéristique de la présente invention, alors que ledit appel de groupe est établi de manière que l'émission de la station mobile dudit locuteur en direction du réseau se fasse sur la voie montante dudit canal de groupe (GCH) et lorsque ladite station mobile de l'auditeur souhaitant interrompre ledit locuteur est sous la couverture de la cellule sous laquelle ledit locuteur se trouve, l'étape a) du procédé décrit ci-dessus est remplacée par une étape d'accès à un canal d'accès commun, tel que le canal d'accès au réseau RACH, pour transmettre au réseau ladite requête d'interruption, ladite requête incluant un identificateur du groupe d'appel considéré.

Selon une autre caractéristique de la présente invention, alors que ledit appel de groupe est établi de manière que l'émission de la station mobile dudit locuteur en direction du réseau se fasse sur la voie montante dudit canal de groupe (GCH) et lorsque ladite station mobile de l'auditeur souhaitant interrompre ledit locuteur est sous la couverture de la cellule sous laquelle ledit locuteur se trouve, l'étape a) du procédé décrit ci-dessus est remplacée par les sous-étapes suivantes :
- une sous-étape où la station mobile de l'auditeur requérant quitte son mode de fonctionnement actif et passe en mode de fonctionnement en veille,
- une sous-étape d'accès à un canal d'accès commun, tel que le canal d'accès au réseau RACH, pour demander l'accès au réseau,
- une sous-étape d'allocation d'un canal de signalisation,
- une sous-étape de transmission sur ledit canal de signalisation de ladite requête d'interruption.

Selon une autre caractéristique de la présente invention, alors que ledit appel de groupe est établi de manière que l'émission de la station mobile dudit locuteur en direction du réseau se fasse sur la voie montante dudit canal de groupe (GCH) et que la transmission sur ledit canal de groupe GCH se fait dans des intervalles de temps de trames, certains intervalles de temps étant inutilisés à des fins directes de communication, et lorsque ladite station mobile de l'auditeur souhaitant interrompre ledit locuteur est sous la couverture de la cellule sous laquelle ledit locuteur se trouve, l'étape a) du procédé décrit ci-dessus est remplacée par une étape de transmission de ladite requête via un ou des intervalles inutilisés dudit canal de groupe GCH.

Selon une autre caractéristique de la présente invention, alors que ledit appel de groupe est établi de manière que l'émission de la station mobile dudit locuteur en direction du réseau se fasse sur la voie montante dudit canal de groupe (GCH) et qu'un canal de signalisation générale est prévu pour le transport de la signalisation à des fins d'établissement d'un appel et de mise à jour le localisation, et lorsque ladite station mobile de l'auditeur souhaitant interrompre ledit locuteur est sous la couverture de la cellule sous laquelle ledit-locuteur se trouve, l'étape a) du procédé décrit ci-dessus est remplacée par une étape de transmission de ladite requête sur ledit canal de signalisation.

Selon une autre caractéristique de la présente invention, ledit procédé comprend une étape de transmission à la station mobile dudit auditeur requérant d'un message quant à la décision prise par le réseau. Par exemple, la requête comprend un nombre aléatoire qui est retranscrit dans ledit message quant à la décision prise par le réseau.

Les caractéristiques de l'invention mentionnées ci-dessus, ainsi que d'autres, apparaîtront plus clairement à la lecture de la description suivante d'un exemple de réalisation, ladite description étant faite en relation avec le dessin joint dans lequel :
La Fig. 1 est un schéma d'un système de téléphonie mobile mettant en oeuvre un appel de groupe et, ce, dans un mode de fonctionnement dit mode 1.5 canal,
La Fig. 2 est un schéma d'un système de téléphonie mobile mettant en oeuvre un appel de groupe et, ce, dans un mode de fonctionnement dit mode 1 canal,
La Fig. 3 est un schéma qui illustre l'échange de messages entre une station mobile requérante et le réseau, et, dans un mode de réalisation particulier, et
La Fig. 4 est un diagramme montrant la structure d'une multitrame du canal d'appel de groupe GCH dans le mode full-rate.

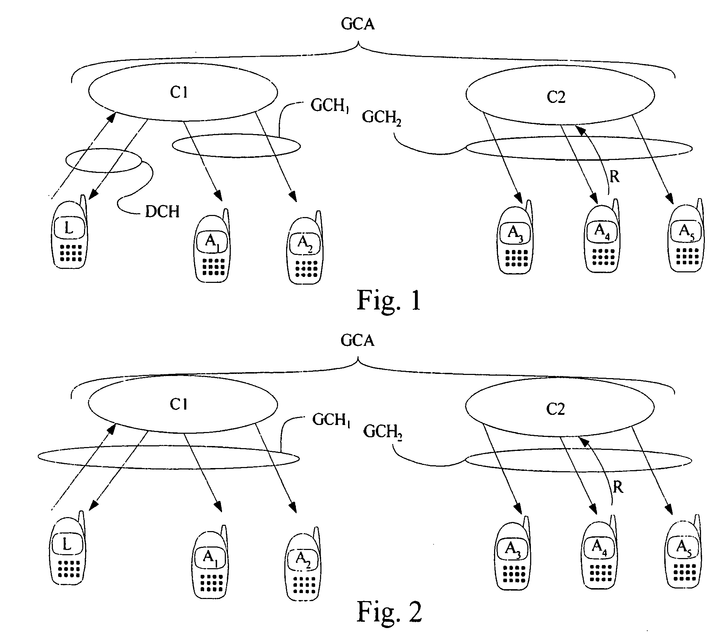

Dans un système de téléphonie mobile du type GSM permettant la mise en oeuvre des appels de groupe, il existe deux modes de fonctionnement dépendant de l'allocation à la station mobile du locuteur soit d'un canal dédié DCH, soit d'un canal du type canal de trafic TCH, que l'on nomme, compte tenu du contexte, canal de groupe GCH. Le premier mode de fonctionnement, généralement appelé "mode 1.5 canal", est décrit en relation avec la Fig. 1. Quant au second mode, généralement appelé "mode 1 canal", il est décrit en relation avec la Fig. 2.

Dans ces Figs. 1 et 2, on a représenté deux cellules C1 et C2 d'une même aire d'un appel de groupe GCA (Group Call Area) et, ce, à un moment donné au cours d'un appel de groupe où la cellule C1 couvre la station mobile d'un locuteur L ainsi que les stations mobiles de certains des auditeurs A₁ et A₂ et où la cellule C2 couvre d'autres stations mobiles d'auditeurs A₃ à A₅. On notera que d'autres cellules peuvent également être mises en oeuvre. Elles sont fonctionnellement équivalentes à la cellule C2.

Dans le premier mode de fonctionnement (Fig. 1), est alloué à la station mobile du locuteur L un canal dédié DCH composé d'une voie montante (flèche en direction de la cellule C1) et d'une voie descendante (flèche en direction de la station du locuteur L) alors qu'à toutes les stations mobiles des auditeurs A₁ à Aₙ (ici n = 5) est alloué un canal de groupe GCH (unique canal logique) qui, au niveau physique, se divise en un canal de groupe GCH₁ pour la cellule C1 et en un canal de groupe GCH₂ pour la cellule C2, eux-mêmes composés chacun d'une voie descendante (flèches en direction des stations des auditeurs) et d'une voie montante mais cette dernière n'est pas utilisée (d'où l'absence de flèches sur la Fig. 1). On précisera que les canaux GCH₁ et GCH₂ sont des canaux physiques.

Dans le second mode de fonctionnement (Fig. 2), il n'y a pas de canal dédié à la station mobile du locuteur L comme précédemment. Par contre, un seul canal logique de groupe GCH (là aussi un canal de groupe GCH₁ et un canal de groupe GCH₂ pour respectivement les cellules C1 et C2) est alloué à l'ensemble des stations mobiles des abonnés du groupe en communication, qu'ils soient locuteur ou auditeurs. La voie montante du canal de groupe GCH est allouée à la seule station mobile du locuteur L alors que la voie descendante est allouée à toutes les stations mobiles des abonnés du groupe. La station mobile du locuteur peut éventuellement désactiver sa propre réception de la voie descendante du canal de groupe GCH pour éviter des phénomènes d'échos.

Selon l'état de la technique tel qu'il est mentionné dans le préambule de la présente description, les voies montantes des canaux GCH₁ et GCH₂ ne peuvent pas être utilisées par les stations mobiles des auditeurs A₁ à A₅.

Selon la présente invention, lorsqu'une station mobile d'un auditeur est sous la couverture d'une cellule (la cellule C2 dans les exemples donnés) n'abritant pas la station mobile du locuteur (cette dernière cellule est appelée par la suite la cellule du locuteur), elle peut accéder à la voie montante du canal de groupe GCH (le canal GCH₂ dans les exemples donnés) pour transmettre au réseau une requête d'interruption du locuteur. Aux Figs. 1 et 2, la station mobile A₄ qui est sous la couverture de la cellule C2 d'une même aire d'un appel de groupe GCA qu'une cellule C1 sous la couverture de laquelle se trouve la station mobile du locuteur L du groupe? émet sur la voie montante du canal GCH₂ une requête R.

Cette requête R est spécifique à une demande d'interruption d'un locuteur d'un appel de groupe. Elle peut contenir l'identificateur ID de l'appel de groupe concerné. L'identificateur ID dont il s'agit ici est par exemple celui qui est décrit dans le chapitre 9 du document 3GPP TS 03.68. Elle peut également être accompagnée d'un nombre aléatoire qui servira pour la reconnaissance de la réponse à la requête. Elle peut encore être accompagnée d'un identificateur de l'abonné requérant, comme par exemple l'identificateur IMSI (International Mobile Subscriber Identity) ou l'identificateur TMSI (Temporary Mobile Subscriber Identity) décrits dans le chapitre 2 du document 3GPP TS 03.03.

Le réseau reçoit donc la requête R émanant de la station mobile requérante (en l'occurrence la station mobile A₄), la traite pour décider d'interrompre ou pas le locuteur, et renvoie, sur la voie descendante du canal de groupe GCH, une réponse REP quant à cette décision. Dans cette réponse, est recopié, le cas échéant, le nombre aléatoire de la requête ce qui permet à la station mobile requérante de s'assurer que cette réponse lui est bien destinée.

En cas de décision d'interrompre, le réseau provoque l'interruption? si bien que le locuteur devient un auditeur et le canal dédié DCH ou la voie montante du canal du groupe GCH, selon le cas, est maintenant affecté à la station mobile A₄ qui devient station mobile de locuteur. La station mobile du requérant A₄ passe en mode de transmission de groupe, par exemple, à la réception de la réponse du réseau. Le réseau transmet également une commande d'interruption à la station mobile du locuteur qui passe alors en mode de réception de groupe.

Le traitement effectué par le réseau consiste à déterminer l'identité de l'auditeur requérant sur la base de son identificateur d'abonné contenu dans la requête, à déterminer l'appel de groupe concerné par la requête de cet auditeur et, ce, sur la base soit de l'identificateur de groupe ID contenu dans la requête, soit du fait que la requête a été reçue sur le canal de groupe GCH qui est un canal dédié à l'appel de groupe concerné, et à déduire de cet appel de groupe l'identité du locuteur. C'est sur la base de l'identité de l'auditeur requérant et de l'identité du locuteur que la décision est prise d'interrompre ou pas le locuteur.

Selon une autre caractéristique de la présente invention, chaque station mobile d'un appel de groupe reçoit du réseau une information pour savoir à chaque instant si oui ou non la cellule sous la couverture de laquelle elle se trouve est également celle sous la couverture de laquelle se trouve la station mobile du locuteur du groupe à l'instant considéré.

Dans un réseau à multiplexage temporel TDMA (Time Division Multiplexing Access) du type d'un réseau GSM, une station mobile doit émettre de manière synchronisée avec la station de base avec laquelle elle est en communication. Pour ce faire, elle avance le moment de l'émission de chacun de ses intervalles de temps (slot) d'une durée liée au temps de propagation aller-retour à la station de base à laquelle elle est rattachée. Dans un réseau GSM, la station de base effectue la mesure de ce temps de propagation aller-retour et détermine la valeur d'un temps TA appelé temps d'avance (timing advance). Cette valeur du temps d'avance TA est alors transmise à la station mobile sur la voie descendante d'un canal de signalisation SACCH. Pour plus de détails sur cette procédure, on peut utilement se reporter au document GSM 05.10.

Dans le cas d'un appel de groupe, la valeur du temps d'avance TA du locuteur est normalement diffusée soit sur le canal de signalisation SACCH correspondant au canal dédié DCH (mode 1.5 canal), soit sur le canal de signalisation SACCH correspondant au canal de groupe GCH (mode 1 canal).

Dans le mode 1 canal, selon la présente invention, pour la ou les cellules de l'aire d'un appel de groupe GCA (Group Call Area) qui ne couvrent pas la station mobile du locuteur du groupe (en l'occurrence la cellule C2), le réseau modifie la valeur de temps d'avance en une valeur prédéfinie autre qu'une valeur susceptible d'être une valeur de mesure, comme par exemple la valeur FF en hexadécimal. Cette modification ne gêne en rien lesdites stations mobiles dans la mesure où elles ne peuvent pas émettre.

Dans le mode 1,5 canal, toujours selon la présente invention, pour la ou les cellules de l'aire d'un appel de groupe GCA (Group Call Area) qui ne couvrent pas la station mobile du locuteur du groupe (en l'occurrence la cellule C2), le réseau donne à la valeur de temps d'avance une valeur prédéfinie autre qu'une valeur susceptible d'être une valeur de mesure, comme par exemple la valeur FF en hexadécimal, et la transmet par le canal de signalisation SACCH affecté à ces cellules.

Dans l'un et l'autre cas, lorsqu'une station mobile reçoit cette valeur prédéfinie en tant que valeur de temps d'avance, selon la présente invention, elle peut, si l'auditeur correspondant le désire, émettre une requête d'interruption sur la voie montante du canal de groupe GCH correspondant (en l'occurrence le canal de groupe GCH₂) conformément à ce qui a été décrit ci-dessus.

Le système de la présente invention peut prévoir le traitement d'une priorité d'être locuteur. Selon un premier mode de réalisation, ce traitement d'une priorité est réalisé au niveau des stations mobiles. Au moment où une station mobile devient la station du locuteur d'un groupe, elle informe le réseau de son identité mais également de son niveau de priorité, par exemple au moyen d'un message spécifique, par exemple le message dit "TALKER INDICATION" tel que défini dans le document ETSI TS 100 940 au chapitre 9.1.44. Le réseau informe alors, par un message que l'on pourra appeler "TALKER INFORMATION", transmis sur la voie descendante du canal de groupe GCH, chaque station mobile du groupe du niveau de priorité de la station mobile du locuteur du groupe.

Au moment où l'auditeur effectue une requête d'interruption du locuteur, sa station mobile, avant la transmission de la requête, compare le niveau de priorité du locuteur actuel au sien. S'il est inférieur ou égal au sien, la requête est transmise au réseau comme précédemment décrit. Par contre s'il est supérieur, la requête n'est pas transmise et l'auditeur requérant est averti que sa requête est directement rejetée.

Selon un autre mode de réalisation, ce traitement d'une priorité est réalisé au niveau du réseau. Lorsque la requête de l'auditeur est reçue par le réseau, celui-ci compare le niveau de priorité du locuteur actuel au niveau de priorité de l'auditeur requérant. Le réseau a connaissance de ce niveau soit parce qu'il est inscrit dans la requête elle-même, soit parce qu'il connu du réseau (il est par exemple contenu dans une base de données répertoriant pour chaque auditeur son niveau de priorité). Si le niveau de priorité du locuteur est inférieur ou égal au niveau de priorité de l'auditeur requérant, la requête est acceptée et elle est rejetée dans le cas contraire.

Selon la présente invention, lorsque le fonctionnement de l'appel de groupe est en mode 1.5 canal (Fig. 1), les stations mobiles d'auditeurs qui sont sous la couverture de la cellule abritant la station mobile du locuteur (appelée par la suite la cellule du locuteur) peuvent accéder à la voie montante du canal de groupe GCH comme il a été mentionné ci-dessus pour ce qui concerne les autres cellules.

Néanmoins, lorsque le fonctionnement de l'appel de groupe est en mode 1 cana! (Fig. 2), les stations mobiles d'auditeurs qui sont sous la couverture de la cellule du locuteur ne peuvent pas accéder à la voie montante du canal de groupe GCH, comme cela a été discuté dans le préambule de la présente description.

Pour résoudre ce problème, et selon un premier mode de réalisation, elles ne pourront pas interrompre le locuteur.

Dans d'autres modes de réalisation, les stations mobiles d'auditeurs qui sont sous la couverture de la cellule du locuteur transmettent leur requête d'interruption du locuteur par d'autres moyens que l'utilisation de la voie montante du canal GCH. On notera que ces requêtes sont ensuite traitées conformément à ce qui a été précédemment décrit pour les stations mobiles d'auditeurs sous la couverture de cellules autres que la cellule du locuteur du groupe.

Ainsi, dans un second mode de réalisation, une station mobile d'auditeur sous la couverture de la cellule du locuteur émet la requête d'interruption de locuteur sur un canal d'accès commun tel que le canal RACH normalement prévu pour qu'une station mobile puisse accéder au réseau pour initier une communication. Cette requête contient la référence du groupe ID (du fait notamment que le canal RACH n'est pas un canal dédié) et, éventuellement un nombre aléatoire pour la reconnaissance de la réponse du réseau. Cette réponse est effectuée soit sur la voie descendante du canal de groupe GCH, soit sur un canal de signalisation commun, tel que le canal AGCH.

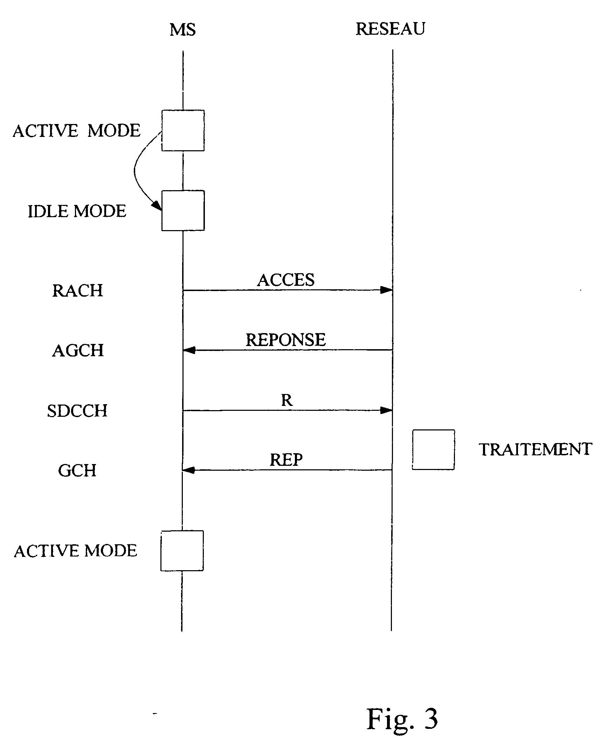

Une variante de ce mode de réalisation est décrite en relation avec la Fig. 3. Une station mobile d'auditeur sous la couverture de la cellule du locuteur du moment d'un appel de groupe quitte son mode de fonctionnement actif (active mode) et passe dans le mode de fonctionnement en veille, mode dit "idle". Alors, elle effectue, comme précédemment, un accès au canal d'accès commun tel que le canal RACH. Le réseau acquitte la réception de cet accès sur le canal prévu à cet effet, soit le canal AGCH, lequel pointe un canal de signalisation dédié SDCCH sur lequel la station mobile s'identifie et transmet alors la requête d'interruption R. La réponse REP du réseau est effectuée sur la voie descendante du canal de groupe GCH. La station mobile du requérant repasse alors dans un mode de fonctionnement actif.

L'intérêt de cette variante est de pouvoir effectuer la requête d'interruption R sur un canal de signalisation dédié, en l'occurrence le canal SDCCH, et, pour ce faire, d'utiliser le protocole connu d'accès au réseau.

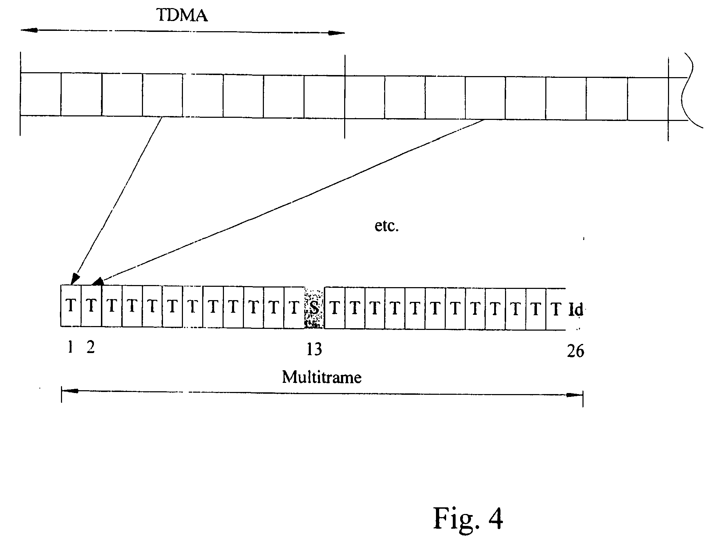

La description du quatrième mode de réalisation nécessite la précision suivante donnée en relation avec la Fig. 4 où l'on peut voir deux trames TDMA constituées chacune de huit slots. En ce qui concerne le canal de groupe GCH qui est du type du canal de données TCH dédié aux données utilisateur, 26 slots de même rang de plusieurs trames successives forment ce qui est appelé une multitrame. Plus précisément, le canal de groupe GCH occupe les trames 1 à 12, et 14 à 25 de la multitrame. La trame 13 de cette multitrame porte un canal dédié de supervision logique SACCH notamment associé au canal GCH. Quant à la trame 26 de cette multitrame, son occupation dépend de la structure de multiplexage utilisé : selon la structure plein débit (full rate), la trame 26 n'est pas utilisée à des fins de supervision (il est dit "idle slot"). Elle sert alors normalement aux stations de base pour effectuer des mesures de puissance reçue et de temps d'avance TA. Par contre, selon la structure demi-débit, la trame 26 est occupée à des fins de supervision. On pourra se reporter utilement au document 3GPP TS 05.01 concernant cette structure.

Comme on le comprendra par la suite, la présente invention n'est applicable que dans le cas où le mode du canal de groupe GCH n'est pas en half-rate, c'est-à-dire lorsqu'il est en full-rate.

Ainsi, selon la présente invention et dans le mode full-rate, c'est la trame 26 qui est utilisée pour transmettre la requête R d'interruption du locuteur. La requête d'interruption R est spécifique à une demande d'interruption du locuteur d'un appel de groupe. Elle peut contenir un identificateur ID de l'appel de groupe concerné, bien que cela ne soit pas strictement nécessaire dans la mesure où la multitrame est dédiée au groupe d'appel.

La description du cinquième mode de réalisation nécessite la précision suivante. Un canal pour la signalisation générale de l'utilisateur, noté SDCCH, est prévu pour le transport de la signalisation à des fins d'établissement d'un appel et de mise à jour de la localisation, par exemple. Il sert également au transport des messages courts SMS.

C'est ce canal SDCCH qui est utilisé par une station mobile d'auditeur sous la couverture de la cellule du locuteur, conformément au cinquième mode de réalisation, pour transmettre au réseau une requête d'interruption du locuteur d'un appel de groupe. Plus précisément, c'est une partie de ce canal qui est réservée, par le réseau, à cette application particulière. Une information, par exemple incluse dans le message "TALKER INFORMATION" mentionné ci-dessus, est transmise du réseau aux stations mobiles d'auditeur pour les avertir quelle partie du canal SDCCH elles doivent utiliser pour émettre leur requête d'interruption. Cette requête est spécifique à une demande d'interruption du locuteur d'un appel de groupe. Elle peut être accompagnée d'un nombre aléatoire qui est recopié dans la réponse faite par le réseau et qui permet à la station mobile de s'assurer que cette réponse lui est bien destinée.

## Revendications

1. Procédé d'interruption du locuteur du moment d'un appel de groupe par un des auditeurs dudit appel de groupe, ledit appel de groupe étant établi dans un réseau de téléphonie mobile supportant des appels de groupe de manière que l'émission de la station mobile dudit locuteur en direction du réseau se fasse sur la voie montante d'un canal dédié (DCH) ou d'un canal de groupe (GCH) et que la réception de la station mobile de chaque auditeur se fasse sur la voie descendante dudit canal de groupe (GCH), **caractérisé en ce qu'**il comporte les étapes suivantes mises en oeuvre lorsque ladite station mobile (A4) de l'auditeur souhaitant interrompre ledit locuteur est sous la couverture d'une cellule (C2) autre que celle (C1) sous laquelle se trouve la station mobile (L) dudit locuteur :
a) une étape d'accès de la station mobile (A4) de l'auditeur requérant à la voie montante dudit canal de groupe (GCH) pour la transmission au réseau d'une requête d'interruption (R) dudit locuteur,
b) une étape de traitement par le réseau de ladite requête (R) pour décider d'interrompre ou pas ledit locuteur, et
c) une étape d'interruption dudit locuteur lorsque ledit réseau a décidé ladite interruption.

2. Procédé d'interruption selon la revendication 1, **caractérisé en ce qu'**il comporte une étape d'information de chaque station mobile (A1 à A5) d'un groupe d'appel pour savoir à chaque instant si oui ou non la cellule sous la couverture de laquelle elle se trouve est également celle sous la couverture de laquelle (C1) se trouve la station mobile du locuteur du moment du groupe d'appel.

3. Procédé d'interruption selon la revendication 2, ledit réseau étant du type où il transmet, sur un canal de signalisation spécifique lié au canal de groupe considéré, une valeur d'un temps d'avance (TA) liée au temps de propagation station mobile du locuteur - réseau, **caractérisé en ce qu'**il comprend, pour la ou les cellules (C2) de l'aire d'un appel de groupe (GCA) qui ne couvrent pas la station mobile (L) du locuteur du groupe d'appel, une étape de modification de la valeur de temps d'avance (TA) en une valeur prédéfinie autre qu'une valeur susceptible d'être une valeur de mesure.

4. Procédé d'interruption selon une des revendications précédentes, **caractérisé en ce qu'**il comporte une étape de traitement des niveaux de priorité relatifs du locuteur et de l'auditeur désirant interrompre le locuteur.

5. Procédé d'interruption selon la revendication 4, **caractérisé en ce que** ladite étape de traitement des niveaux de priorité relatifs comprend :
- une sous-étape de transmission à chacun desdits auditeurs de l'appel de groupe du niveau de priorité du locuteur du moment,
- une sous-étape de comparaison dudit niveau de priorité du locuteur transmis au niveau de priorité de l'auditeur désirant interrompre le locuteur, ladite étape étant mise en oeuvre par la station mobile dudit auditeur,
ladite requête d'interruption du locuteur du moment étant émise si la sous-étape de comparaison révèle que le niveau de priorité dudit auditeur est au moins supérieur à celui du locuteur.

6. Procédé d'interruption selon la revendication 4, **caractérisé en ce que** ladite étape de traitement des niveaux de priorité relatifs comprend une sous-étape de comparaison dudit niveau de priorité du locuteur au niveau de priorité de l'auditeur requérant, ladite étape étant mise en oeuvre par ledit réseau,
ladite requête étant rejetée si la sous-étape de comparaison révèle que le niveau de priorité dudit auditeur est au moins supérieur à celui du locuteur.

7. Procédé d'interruption selon la revendication 6, **caractérisé en ce que** le niveau de priorité de l'auditeur requérant est transmis, en même temps que ou dans ladite requête d'interruption.

8. Procédé d'interruption selon la revendication 6, **caractérisé en ce que** le niveau de priorité de chacun des abonnés d'un appel de groupe est connu du réseau.

9. Procédé d'interruption selon une des revendications précédentes, ledit appel de groupe étant établi de manière que l'émission de la station mobile dudit locuteur en direction du réseau se fasse sur la voie montante d'un canal dédié (DCH), **caractérisé en ce que** les étapes a), b) et c) sont également mises en oeuvre lorsque ladite station mobile (A1, A2) de l'auditeur souhaitant interrompre ledit locuteur est sous la couverture de la cellule (C1) sous laquelle ledit locuteur se trouve.

10. Procédé d'interruption selon une des revendications 1 à 8, ledit appel de groupe étant établi de manière que l'émission de la station mobile dudit locuteur en direction du réseau se fasse sur la voie montante dudit canal de groupe (GCH), **caractérisé en ce que**, lorsque ladite station mobile de l'auditeur souhaitant interrompre ledit locuteur est sous la couverture de la cellule (C1) sous laquelle ledit locuteur se trouve, l'étape a) est remplacée par une étape d'accès à un canal d'accès commun (RACH), tel que le canal d'accès au réseau RACH, pour transmettre au réseau ladite requête d'interruption (R), ladite requête incluant un identificateur (ID) du groupe d'appel considéré.

11. Procédé d'interruption selon une des revendications 1 à 8, ledit appel de groupe étant établi de manière que l'émission de la station mobile (L) dudit locuteur en direction du réseau se fasse sur la voie montante dudit canal de groupe (GCH), **caractérisé en ce que**, lorsque ladite station mobile (A1, A2) de l'auditeur souhaitant interrompre ledit locuteur est sous la couverture de la cellule (C1) sous laquelle ledit locuteur se trouve, l'étape a) est remplacée par les sous-étapes suivantes :
- une sous-étape où la station mobile (A1, A2) de l'auditeur requérant quitte son mode de fonctionnement actif et passe en mode de fonctionnement en veille,
- une sous-étape d'accès à un canal d'accès commun, tel que le canal d'accès au réseau RACH, pour demander l'accès au réseau,
- une sous-étape d'allocation d'un canal de signalisation,
- une sous-étape de transmission sur ledit canal de signalisation de ladite requête d'interruption (R).

12. Procédé d'interruption selon une des revendications 1 à 8, ledit appel de groupe étant établi de manière que l'émission de la station mobile (L) dudit locuteur en direction du réseau se fasse sur la voie montante dudit canal de groupe (GCH), la transmission sur ledit canal de groupe (GCH) se faisant dans des intervalles de temps de trames, certains intervalles de temps étant inutilisés à des fins directes de communication, **caractérisé en ce que**, lorsque ladite station mobile (A1, A2) de l'auditeur souhaitant interrompre ledit locuteur est sous la couverture de la cellule (C1) sous laquelle ledit locuteur se trouve, l'étape a) est remplacée par une étape de transmission de ladite requête (R) via un ou des intervalles inutilisés dudit canal de groupe (GCH).

13. Procédé d'interruption selon une des revendications 1 à 8, ledit appel de groupe étant établi de manière que l'émission de la station mobile (L) dudit locuteur en direction du réseau se fasse sur la voie montante dudit canal de groupe (GCH), un canal de signalisation générale (SDCCH) étant prévu pour le transport de la signalisation à des fins d'établissement d'un appel et de mise à jour de localisation, **caractérisé en ce que**, lorsque ladite station mobile (A1, A2) de l'auditeur souhaitant interrompre ledit locuteur est sous la couverture de la cellule (C1) sous laquelle ledit locuteur se trouve, l'étape a) est remplacée par une étape de transmission de ladite requête (R) sur ledit canal de signalisation.

14. Procédé d'interruption selon une des revendications précédentes, **caractérisé en ce qu'**il comprend une étape de transmission à la station mobile dudit auditeur requérant d'un message quant à la décision prise par le réseau.

15. Procédé d'interruption selon la revendication 14, **caractérisé en ce que** ladite requête (R) comprend un nombre aléatoire qui est retranscrit dans ledit message quant à la décision prise par le réseau.

## Claims

1. Process for interrupting the current speaker in a group call by one of the listeners to said group call, said group call being set up in a mobile telephone network that supports group calls such that the transmission from the mobile terminal of said speaker to the network takes place along the up line of a dedicated channel (DCH) or a group channel (GCH) and the reception by the mobile terminal of each listener takes place along the down line of said group channel (GCH), **characterised in that** it comprises the following steps carried out when said mobile terminal (A4) of the listener wishing to interrupt said speaker is within the coverage of a cell (C2) other than the cell (C1) in which the mobile terminal (L) of the speaker is located:
a) a step of access, by the mobile terminal (A4) of the requesting listener, to the up line of said group channel (GCH) to send the network a request to interrupt (R) said speaker,
b) a step of processing of said request (R) by the network, to decide whether or not to interrupt the speaker, and
c) a step of interrupting said speaker when said network has decided to allow said interruption.

2. Interruption process according to claim 1, **characterised in that** it comprises a step of acquiring information as to each mobile terminal (A1 to A5) of a call group to find out at any given moment whether or not the cell in which it is located is also the cell the coverage of which (C1) includes the mobile terminal of the current speaker in the call group.

3. Interruption process according to claim 2, said network being of the type that transmits, along a specific signalling channel linked to the group channel under consideration, a lead time value (TA) linked to the propagation time from the speaker's mobile terminal to the network, **characterised in that** it comprises, for the cell or cells (C2) of the area of a group call (GCA) which do(es) not cover the mobile terminal (L) of the speaker in the call group, a step of modifying the lead time value (TA) into a predefined value other than a value capable of being a measurement.

4. Interruption process according to one of the preceding claims, **characterised in that** it comprises a step of processing the relative priority levels of the speaker and of the listener wishing to interrupt the speaker.

5. Interruption process according to claim 4, **characterised in that** said step of processing the relative priority levels comprises:
- a sub-step of transmitting, to each of said listeners to the group call, the priority level of the current speaker,
- a sub-step of comparing said priority level of the speaker being transmitted with the priority level of the listener wishing to interrupt the speaker, said step being carried out by the mobile terminal of said listener,
said request to interrupt the current speaker being transmitted if the comparison sub-step shows that the priority level of said listener is at least higher than that of the speaker.

6. Interruption process according to claim 4, **characterised in that** said step of processing the relative priority levels comprises a sub-step of comparing said priority level of the speaker with the priority level of the requesting listener, said step being carried out by said network,
said request being rejected if the comparison sub-step shows that the priority level of said listener is at least higher than that of the speaker.

7. Interruption process according to claim 4, **characterised in that** the priority level of the requesting listener is transmitted at the same time as or within said interruption request.

8. Interruption process according to claim 4, **characterised in that** the priority level of each of the participants in a group call is known to the network.

9. Interruption process according to one of the preceding claims, said group call being set up so that the transmission from the mobile terminal of said speaker to the network takes place along the up line of a dedicated channel (DCH), **characterised in that** steps a), b) and c) are also carried out when said mobile terminal (A1, A2) of the listener wishing to interrupt said speaker is within the coverage of the cell (C1) in which the speaker is located.

10. Interruption process according to one of claims 1 to 8, said group call being set up so that the transmission from the mobile terminal of said speaker to the network takes place along the up line of said group channel (GCH), **characterised in that**, when said mobile terminal of the listener wishing to interrupt said speaker is within the coverage of the cell (C1) in which the speaker is located, step a) is replaced by a step of access to a common access channel (RACH), such as the access channel to the RACH network, for transmitting said interruption request (R) to the network, said request including an identifier (ID) of the call group in question.

11. Interruption process according to one of claims 1 to 8, said group call being set up so that the transmission from the mobile terminal (L) of said speaker to the network takes place along the up line of said group channel (GCH), **characterised in that**, when said mobile terminal (A1, A2) of the listener wishing to interrupt said speaker is within the coverage of the cell (C1) in which the speaker is located, step a) is replaced by the following sub-steps:
a sub-step in which the requesting listener's mobile terminal (A1, A2) departs from its active operating mode and goes into standby mode,
a sub-step of access to a common access channel, such as the access channel to the RACH network, for requesting access to the network,
a sub-step of allocation of a signalling channel,
a sub-step of transmitting said interruption request (R) through said signalling channel.

12. Interruption process according to one of claims 1 to 8, said group call being set up so that the transmission from the mobile terminal (L) of said speaker to the network takes place along the up line of said group channel (GCH), the transmission through said group channel (GCH) taking place in time frame intervals, certain time intervals being left unused for direct communication purposes, **characterised in that**, when said mobile terminal (A1, A2) of the listener wishing to interrupt said speaker is within the coverage of the cell (C1) in which the speaker is located, step a) is replaced by a step of transmitting said request (R) through one or more unused intervals of said group channel (GCH).

13. Interruption process according to one of claims 1 to 8, said group call being set up so that the transmission from the mobile terminal (L) of said speaker to the network takes place along the up line of said group channel (GCH), a general signalling channel (SDCCH) being provided for transporting the signals for the purpose of setting up a call and updating the location, **characterised in that**, when said mobile terminal (A1, A2) of the listener wishing to interrupt said speaker is within the coverage of the cell (C1) in which the speaker is located, step a) is replaced by a step of transmitting said request (R) through said signalling channel.

14. Interruption process according to one of the preceding claims, **characterised in that** it comprises a step of transmitting, to the mobile terminal of the requesting listener, a message informing him of the decision taken by the network.

15. Interruption process according to claim 14, **characterised in that** said request (R) includes a random number which is re-sent in said message informing the listener of the decision taken by the network.

## Patentansprüche

1. Verfahren zur Unterbrechung des Sprechers zum Zeitpunkt eines Gruppenanrufs durch einen der Hörer des Gruppenanrufs, wobei der Gruppenanruf in einem Mobiltelefonnetz erfolgt, das Gruppenanrufe derart trägt, dass das Senden von der Mobilstation des Sprechers in Richtung des Netzes auf dem aufsteigenden Weg eines speziellen Kanals (DCH) oder eines Gruppenkanals (GCH) erfolgt, und dass das Empfangen der Mobilstation jedes Hörers auf dem absteigenden Weg des Gruppenkanals (GCH) erfolgt, **dadurch gekennzeichnet, dass** es die folgenden Einsatzschritte umfasst, wenn sich die Mobilstation (A4) des Hörers, die den Sprecher unterbrechen möchte, in der Abdeckungszone einer anderen Zelle (C2) als jener (C1) befindet, in der sich die Mobilstation (L) des Sprechers befindet:
a) einen Schritt des Zugreifens auf die Mobilstation (A4) des Hörers, der den aufsteigenden Weg des Gruppenkanals (GCH) für die Übertragung eines Antrags (R) auf Unterbrechung des Sprechers an das Netz anfordert,
b) einen Schritt der Bearbeitung des Antrags (R) durch das Netz, um zu entscheiden, ob der Sprecher unterbrochen wird oder nicht, und
c) einen Schritt der Unterbrechung des Sprechers, wenn das Netz diese Unterbrechung beschlossen hat.

2. Unterbrechungsverfahren nach Anspruch 1, **dadurch gekennzeichnet, dass** es einen Schritt der Information jeder Mobilstation (A1 bis A5) über einen Gruppenanruf umfasst, um jederzeit zu wissen, ob die Zelle, in deren Abdeckungszone sie sich befindet, auch jene ist, in deren Abdeckungszone (C1) sich die Mobilstation des Sprechers zum Zeitpunkt des Gruppenanrufs befindet.

3. Unterbrechungsverfahren nach Anspruch 2, wobei das Netz von dem Typ ist, dass es auf einem spezifischen Anzeigekanal, der mit dem betreffenden Gruppenkanal verbunden ist, einen Vorlaufzeitwert (TA) überträgt, der mit der Ausbreitungszeit der Mobilstation des Sprechers verbunden ist, wobei das Netz **dadurch gekennzeichnet ist, dass** es für die Zelle (n) (C2) des Bereichs eines Gruppenanrufs (GCA), die nicht die Mobilstation (L) des Sprechers des Gruppenanrufs abdecken, einen Schritt der Änderung des Vorlaufzeitwertes (TA) in einen vordefinierten Wert umfasst, der sich von dem Wert, der ein Messwert sein kann, unterscheidet.

4. Unterbrechungsverfahren nach einem der vorhergehenden Ansprüche, **dadurch gekennzeichnet, dass** es einen Schritt der Bearbeitung der relativen Prioritätsniveaus des Sprechers und des Hörers, der den Sprecher unterbrechen möchte, umfasst.

5. Unterbrechungsverfahren nach Anspruch 4, **dadurch gekennzeichnet, dass** der Schritt der Bearbeitung der relativen Prioritätsniveaus umfasst:
- einen Unterschritt der Übertragung des Gruppenanrufs des Prioritätsniveaus des Sprechers des Moments an jeden der Hörer,
- einen Unterschritt des Vergleichens des übertragenen Prioritätsniveaus des Sprechers mit dem Prioritätsniveau des Hörers, der den Sprecher unterbrechen möchte, wobei der Schritt durch die Mobilstation des Hörers durchgeführt wird,
wobei der Antrag auf Unterbrechung des Sprechers des Moments entsandt wird, wenn der Unterschritt des Vergleichens zeigt, dass das Prioritätsniveau des Hörers mindestens größer als jenes des Sprechers ist.

6. Unterbrechungsverfahren nach Anspruch 4, **dadurch gekennzeichnet, dass** der Schritt der Bearbeitung der relativen Prioritätsniveaus einen Unterschritt des Vergleichens des Prioritätsniveaus des Sprechers mit dem Prioritätsniveaus des den Antrag stellenden Hörers umfasst, wobei der Schritt von dem Netz durchgeführt wird, wobei der Antrag abgewiesen wird, wenn der Unterschritt des Vergleichens zeigt, dass das Prioritätsniveau des Hörers weniger groß als jene des Sprechers ist.

7. Unterbrechungsverfahren nach Anspruch 6, **dadurch gekennzeichnet, dass** das Prioritätsniveau des den Antrag stellenden Hörers gleichzeitig mit oder in dem Unterbrechungsantrag übertragen wird.

8. Unterbrechungsantrag nach Anspruch 6, **dadurch gekennzeichnet, dass** das Prioritätsniveau jedes der Teilnehmer eines Gruppenanrufs aus dem Netz bekannt ist.

9. Unterbrechungsverfahren nach einem der vorhergehenden Ansprüche, wobei der Gruppenanruf derart erstellt wird, dass das Senden von der Mobilstation des Sprechers in Richtung des Netzes auf dem aufsteigenden Weg eines speziellen Kanals (DCH) erfolgt, **dadurch gekennzeichnet, dass** die Schritte a), b) und c) ebenfalls eingesetzt werden, wenn die Mobilstation (A1, A2) des Hörers, der den Sprecher unterbrechen möchte, unter der Abdeckungszone der Zelle (C1) ist, unter der sich der Sprecher befindet.

10. Unterbrechungsverfahren nach einem der Ansprüche 1 bis 8, wobei der Gruppenanruf derart erstellt wird, dass das Senden von der Mobilstation des Sprechers in Richtung des Netzes auf dem aufsteigenden Weg des Gruppenkanals (GCH) erfolgt, **dadurch gekennzeichnet, dass**, wenn die Mobilstation des Hörers, der den Sprecher unterbrechen möchte, unter der Abdeckungszone der Zelle (C1) ist, unter der sich der Sprecher befindet, der Schritt a) durch einen Schritt des Zugreifens auf einen gemeinsamen Zugriffskanal (RACH), wie beispielsweise Zugriffskanal auf das Netz RACH, ersetzt wird, um den Unterbrechungsantrag (R) an das Netz zu übertragen, wobei der Antrag einen Identifikator (ID) des betreffenden Gruppenanrufs einschließt.

11. Unterbrechungsverfahren nach einem der Ansprüche 1 bis 8, wobei der Gruppenanruf derart erstellt wird, dass das Senden von der Mobilstation (L) des Sprechers in Richtung des Netzes auf dem aufsteigenden Weg des Gruppenkanals (GCH) erfolgt, **dadurch gekennzeichnet, dass**, wenn die Mobilstation (A1, A2) des Hörers, der den Sprecher unterbrechen möchte, unter der Abdeckungszone der Zelle (C1) ist, unter der sich der Sprecher befindet, der Schritt a) durch die folgenden Unterschritte ersetzt wird:
- einen Unterschritt, in dem die Mobilstation (A1, A2) des den Antrag stellenden Hörers ihre aktive Betriebsart verlässt und in einen Bereitschaftsbetrieb übergeht,
- einen Unterschritt des Zugreifens auf einen gemeinsamen Zugriffskanal, wie den Zugriffskanal auf das Netz RACH, um den Zugriff auf das Netz anzufordern,
- einen Unterschritt der Zuteilung eines Anzeigekanals,
- einen Unterschritt der Übertragung des Unterbrechungsantrags (R) auf dem Anzeigekanal.

12. Unterbrechungsverfahren nach einem der Ansprüche 1 bis 8, wobei der Gruppenanruf derart erstellt wird, dass das Senden von der Mobilstation (L) des Sprechers in Richtung des Netzes auf dem aufsteigenden Weg des Gruppenkanals (GCH) erfolgt, wobei die Übertragung auf dem Gruppenkanal (GCH) in Rasterzeitabschnitten erfolgt, wobei gewisse Zeitabschnitte nicht zu direkten Kommunikationszwecken verwendet werden, **dadurch gekennzeichnet, dass**, wenn die Mobilstation (A1, A2) des Hörers, der den Sprecher unterbrechen möchte, unter der Abdeckungszone der Zelle (C1) ist, unter der sich der Sprecher befindet, der Schritt a) durch einen Schritt der Übertragung des Antrags (R) über einen oder mehrere der nicht verwendeten Abschnitte des Gruppenkanals (GCH) ersetzt wird.

13. Unterbrechungsverfahren nach einem der Ansprüche 1 bis 8, wobei der Gruppenanruf derart erstellt wird, dass das Senden von der Mobilstation (L) des Sprechers in Richtung des Netzes auf dem aufsteigenden Weg des Gruppenkanals (GCH) erfolgt, wobei ein allgemeiner Anzeigekanal (SDCCH) für die Beförderung der Anzeige zu Zwecken der Erstellung eines Anrufs und der Aktualisierung der Lokalisierung vorgesehen ist, **dadurch gekennzeichnet, dass**, wenn die Mobilstation (A1, A2) des Hörers, der den Sprecher unterbrechen möchte, unter der Abdeckungszone der Zelle (C1) ist, unter der sich der Sprecher befindet, der Schritt a) durch einen Schritt der Übertragung des Antrags (R) auf dem Anzeigekanal ersetzt wird.

14. Unterbrechungsverfahren nach einem der vorhergehenden Ansprüche, **dadurch gekennzeichnet, dass** es einen Schritt der Übertragung einer Meldung über den vom Netz gefassten Beschluss an die Mobilstation des den Antrag stellenden Hörers umfasst.

15. Unterbrechungsverfahren nach Anspruch 14, **dadurch gekennzeichnet, dass** der Antrag (R) eine zufällige Zahl umfasst, die in die Meldung über den vom Netz gefassten Beschluss umgeschrieben wird.
